# EUROPEAN PATENT SPECIFICATION

(11) **EP 0 270 899 B1**
(45) Date of publication and mention of the grant of the patent: **16.06.1993**
(21) Application number: 87117252.4
(22) Date of filing: 24.11.1987
(51) Int. Cl.: B29C 43/10, B30B 11/00, B29C 67/00

(54) **Isostatic molding method using hydraulic silicone crumb**
Isostatisches Formungsverfahren mittels eines bröckeligen hydraulischen Silikons
Procédé de moulage isostatique utilisant un polysiloxane friable comme milieu hydraulique

(30) Priority: 08.12.1986 US 938942
(43) Date of publication of application: 15.06.1988
(73) Proprietor: DOW CORNING CORPORATION, Midland Michigan 48640 (US)
(72) Inventor: Beck, Earl Wilbur, Dublin California (US); Brady, Sam Allan, Midland Michigan (US)
(74) Representative: Sternagel, Hans-Günther, Dr.

(56) References cited:
- EP-A- 0 233 134
- EP-A- 0 236 903
- EP-A- 0 260 216
- US-A- 3 843 601
- US-A- 4 011 929

## Description

This invention relates to an isostatic molding method in which a flexible container with a fluid-like medium is used to impart pressure to a hardenable material.

Methods of molding using pressure and a flexible container has been known for many years. A variety of articles and composites can be molded by these prior art methods. For example, veneer can be prepared using a pressure bag which is inflated with a fluid. Such a method is described by Bendix in U.S. Patent No, 2,390,684, issued December 11, 1945. Another method which uses an impermeable flexible bag and exerts pressure with a fluid is used to manufacture laminates of plywood for building boats and airplanes, as described by Glavin in U.S. Patent No, 2,401,299, issued June 4, 1946. Heat and pressure are applied using a fluid and flexible membranes in a method of making shoes and boots as described by Hunter in U.S. Patent No, 2,489,643, issued November 29, 1949.

Fiber reinforced composites are made from preforms which are laminated resin impregnated lay-ups. Such composites are made using an elastic bladder as an enveloping, pressure means where the bladder contains a hydraulic fluid. The composites can be radomes and boat hulls. This method is described by George et al. in U.S. Patent No, 3,112,520, issued December 3, 1963.

Loomis in U.S. Patent No, 3,593,373, issued July 20, 1971, teaches an isostatic method of pressing ceramic powder to form pipe using an elastic bladder containing a hydraulic fluid. This method is another kind of molding which uses flexible tooling.

Baxendale et al, in U.S. Patent No, 3,830,607, issued August 20, 1974, teach an apparatus for compacting material which uses an elastomeric bag which contains hydraulic fluid. Materials for compacting include powders such as ferrous metal powders.

Miller in U.S. Patent No, 3,879,160, issued April 22, 1975, teaches an isostatic curing apparatus suitable for curing wrapped reinforced composite fibrous laminates. This apparatus is used in methods in which fluid pressure is transmitted during the curing process through the use of a flexible sleeve.

Saito in U.S. Patent No, 3,956,452, issued May 11, 1976, teaches an isostatic pressing method of molding powders in which a thin rubber bag containing liquid is used for exerting the pressure.

Tambussi in U.S. Patent No, 4,379,013, issued April 5, 1983, teaches a method and apparatus for fabricating a composite structure by curing a plurality of resin-preimpregnated fiber sheets (preforms) under heat and pressure. This method uses a flexible pressure bag to apply the pressure during the curing operation of the composite.

The above patents show the methods of isostatic pressure molding and the apparatus which can be used.

The above patents teach the use of fluids, such as hydraulic fluids, in flexible containers, such as rubber bags. Materials used in these systems were mainly fluid, i.e. gases or liquids. The use of solid materials for hydraulic purposes is much more limited because most solids do not readily move and transfer pressure as conveniently as gases and liquids. Silicone fluids are used in hydraulic systems but these systems must be closed systems in the same manner as other hydraulic systems using gases or liquids. If the systems using gases or liquids are not closed, loss of material will occur and the effectiveness of the hydraulics is lost.

Other disadvantages of liquids is that if a leak should occur, it may cause undesirable environmental conditions and the cleanup may be difficult. Some liquids may be unstable under high temperature conditions and solidify or deteriorate such that the hydraulic system is ineffective for its purpose.

Solid materials which can be deformed might be suggested as useful material for hydraulic purposes and for use in methods for thermal expansion molding for composites. These thermal expansion molding methods use solid elastomeric materials in molds to cause pressure against a composite during the molding process. Such thermal expansion molding methods have the disadvantage that the determination of the pressure against the composite is difficult and requires very careful filing of the elastomeric mold portion because either under or over filing can cause unwanted pressures which result in bad composites. Because of the difficulty of using solid elastomeric materials in the thermal expansion molding methods, the expense is high enough to cause these methods to be used only in very special applications in which the expense would be acceptable. However, not much is reported for use of solid materials for hydraulic purposes because the solid materials do not flow.

Bruner in U.S. Patent No, 3,843,601, issued October 22, 1974, describes a hydraulic elastomer which is reported to have a high cross-link density and a high proportion of free chain ends. Bruner crumbles his elastomer under high shear stress to a powder which flows like a viscous fluid through a narrow orifice. Bruner reports that silicone elastomers are desirable materials for their high thermal stability, have high compressibility, and can be forced through an orifice. However, the silicone elastomers do not easily flow back into their original position because they are relatively hard. Oil has been used to plasticize the elastomer but this results in oil bleed which leaks out of the system. Bruner teaches that an improved hydraulic elastomer can be obtained by curing a linear vinyl containing siloxane copolymer which is made up of dimethylsiloxane units and methylvinylsiloxane units and which has a molecular weight between 20,000 and 200,000 corresponding to viscosities between 1000 and 1,000,000 centipoise at 25°C. The vinyl is present in Bruner's copolymer in an amount of from 0.1 to 0.9 mole percent. Bruner teaches that even with the optimum vinyl content it is found that the ultimate properties of the cured elastomers are not as good as when the viscosity of the fluid is at least 5000 cp and that good physical properties are obtained when the viscosity of the fluid reaches 1,000,000 cp. Bruner cures his vinyl containing copolymer with peroxide. Bruner teaches that those cured elastomers of his which have durometers on the Shore A scale of 8, 10, 19, 22, and 26 are outside the acceptable range of hardness which means that the acceptable hardness are those which have durometers on the Shore A scale between 11 and 18.

An object of the present invention is to improve the method of isostatic molding by using a silicone crumb which is easily compressed, extrudes well, provides a consistent pressure, controls the pressure to a predetermined value, readily flows like a liquid, does not agglomerate, and can be repeatedly recycled between crumb and clear material.

This invention relates to an improvement in an isostatic pressing method of molding an article comprising placing a hardenable material in a mold cavity wherein the hardenable material is in contact with a flexible container containing a medium obtained by curing a vinyl-containing siloxane copolymer and capable of applying fluid-like pressure, applying heat and pressure to harden the material, and thereafter, removing the article from the mold, the improvement consisting of using as the medium a silicone crumb comprising the cured product obtained by curing a mixture of (A) a vinyl-containing polyorganosiloxane consisting essentially of units selected from the group consisting of diorganosiloxane units, monoorganosilsesquioxane units, and triorganosiloxy units in which the organic radicals are monovalent hydrocarbon radicals or monovalent halogenated hydrocarbon radicals, in the polyorganosiloxane the organic radicals being such that at least 0.1 weight percent of them are vinyl radicals, (B) a silicon-bonded hydrogen containing polysiloxane in which there is at least 0.5 weight percent silicon-bonded hydrogen atoms, the valences of the silicon atoms not being satisfied by divalent oxygen atoms or silicon-bonded hydrogen atoms are satisfied by monovalent hydrocarbon radicals or monovalent halogenated hydrocarbon radicals, (C) a platinum catalyst for the hydrosilation reaction of (A) and (B), the cured product being in a fine particulate form which exhibits an extrusion rate of at least 50 grams per minute through an orifice of 0.5 inch diameter under a pressure of 345 kilopascals and compression points of less than 1035 kilopascals for the first two compressions.

The isostatic methods of molding are well known in the art as illustrated by the patents cited above. The methods involve placing a material which is hardenable in a mold cavity. The hardenable material is in contact with a flexible container which contains a medium capable of applying fluid-like pressure. The pressure is transferred to the hardenable material evenly because the flexible tooling is used and acts in a hydraulic manner. Heating can also be used during the application of pressure. The hardenable material can be a preform which contains a curable resin, such as would be used to make composites. The flexible container can be an elastomeric or rubber bag.

In these methods, the medium of the flexible container is a fluid, that is, a gas or a liquid. Many of the conventional medium are air, water, and other gases and liquids, including silicone oils. However, these materials have disadvantages such as they can leak from very small holes, pinholes for example, thus reducing the pressure or contaminate the surrounding mold materials if these fluids are water, silicone oil, and the like. These isostatic methods can be improved by using a solid material, such as a silicone crumb as described in our copending application Serial No, 835,496, filed March 3, 1986. A method of making the crumb is also claimed by Beck in Serial No, 835,497, filed March 3, 1986, assigned to the same party as the present application, which also shows a method of making the silicone crumb.

The silicone crumb is made by curing a composition comprising a vinyl-containing polyorganosiloxane, a silicon-bonded hydrogen-containing polysiloxane, and a platinum catalyst.

The vinyl-containing polyorganosiloxane of (A) are those which are made up of repeating units of diorganosiloxane units, monoorganosilsesquioxane units, and triorganosiloxy units. Other siloxane units can also be present in small amounts if the resulting properties can be obtained, for example, SiO₂ units. The organic radicals of the polyorganosiloxane can be monovalent hydrocarbon radicals such as methyl, ethyl, propyl, isopropyl, butyl, octyl, phenyl, vinyl, allyl, and cyclohexyl, or monovalent halogenated hydrocarbon radicals such as chloropropyl, 3,3,3-trifluoropropyl, and 2-(perfluorobutyl)ethyl. Preferably, the organic radicals are methyl and vinyl. The polyorganosiloxane of (A) should contain at least 0.1 weight percent vinyl radical based on the total weight of the polyorganosiloxane. The most preferred polyorganosiloxanes of (A) because they provide the best property profile of extrusion rate (flow) and compression points (point at which the crumb changes into a clear solid) are branched polyorganosiloxanes containing a combination of diorganosiloxane units, monoorganosilsesquioxane units, and triorganosiloxy units. Preferably, these branched vinyl-containing polyorganosiloxanes are those described by Brown et al. in U.S. Patent No. 4,374,967, issued February 22, 1983, which shows the preparation of the vinyl-containing polymethylsiloxanes and the polymethylsiloxanes per se. These vinyl-containing polymethylsiloxanes described by Brown et al. consist essentially of 80 to 96.5 mole percent of dimethylsiloxane units, 2 to 10 mole percent of methylsilsesquioxane units, 1.25 to 6.0 mole percent of trimethylsiloxy units, and 0.25 to 4.0 mole percent of vinyldimethylsiloxy units. The branched polyorganosiloxane of (A) preferably have a viscosity at 25°C, of less than 5 pascal-seconds.

Another preferred vinyl-containing polyorganosiloxane is a linear triorganosiloxy endblocked polymethylvinylsiloxane having a viscosity at 25°C. of less than 50 pascal-seconds. The most preferred are those which have trimethylsiloxy endblocking.

The silicon-bonded hydrogen-containing polysiloxane of (B) contains at least 0.5 weight percent hydrogen atom and the radicals bonded to the silicon atoms other than hydrogen atoms and divalent oxygen atoms are monovalent hydrocarbon radical or halogenated hydrocarbon radicals which are illustrated above for the polyorganosiloxane of (A). Preferably, the organic radicals are methyl. The preferred polysiloxanes of (B) are the trimethylsiloxy endblocked polymethylhydrogensiloxanes and those most preferred have 1.4 to 1.6 weight percent silicon-bonded hydrogen atoms.

The platinum catalyst (C) is a catalyst for the hydrosilation reaction between the vinyl radicals on the polyorganosiloxane of (A) and the SiH on the polysiloxane of (B). The platinum catalysts are well known in the art and can be selected from any of them, but the catalyst should be one which is compatible in the mixture of (A) and (B) for even distribution and even cure. The platinum catalysts include chloroplatinic acid and its hexahydrate as described in U.S. Patent No. 2,823,218, issued February 11, 1958 to Speier et al., and the reaction, products of chloroplatinic acid with vinyl endblocked polysiloxane fluids such as sym-divinyltetramethyldisiloxane as described by Willing in U.S. Patent No. 3,419,593, issued December 31, 1968. The platinum catalysts described by Willing which are preferred are those which are complexes of a divinylsiloxane. Other platinum catalysts include the alkene complexes described by Ashby in U.S. Patent No. 3,159,601, issued December 1, 1964, and in U.S. Patent No. 3,159,662, issued December 1, 1964; the platinum acetylacetonate described by Baney in U.S. Patent No. 3,723,497, issued March 27, 1973; the platinum alcoholates described by Lamoreaux in U.S. Patent No. 3,220,972, issued November 30, 1965, and in many more patents which describe other types of platinum catalysts, The foregoing patents show the various type of platinum catalysts. The preferred platinum catalysts are those described by Willing.

The compositions may begin to cure immediately when (A), (B), and (C) are mixed. If this curing reaction is too rapid, the curing can begin to take place before the ingredients are fully mixed and the result is an uneven cure, Therefore, certain compositions may desirably contain a platinum catalyst inhibitor which retards the hydrosilation reaction at room temperature. Many platinum catalyst inhibitors are known in the art and include, benzotriazole as described in U.S. Patent No. 3,192,181, issued June 29, 1965; the acetylenic compounds described in U.S. Patent No. 3,445,420, issued May 20, 1969; the aromatic heterocyclic nitrogen compounds, pyridazine, pyrazine, quinoline, 2,2ʹ-biquinoline, bipyridine, naphthyridine, quinaldine, dialkyl formamides, thioamides, alkylthioureas, and ethylene thiourea described in U.S. Patent No. 3,188,299, issued June 8, 1965; the polymethylvinylsiloxane cyclics discussed in U.S. Patent No. 3,923,705, issued December 2, 1975; and many others. The preferred platinum catalyst inhibitors are the acetylenic compounds. The above patents show the various platinum catalyst inhibitors and their use in addition cure compositions (hydrosilation reaction).

The mixtures can also contain other ingredients such as fillers. Some fillers may be used in small amounts, such a ground quartz or other non-reinforcing fillers, preferably, less than 5 weight percent. Other ingredients include heat stability additives, pigments or other colorants. However, the additives or the amounts used should not be detrimental to the crumb properties.

The amounts of (B) mixed with 100 parts by weight of (A) should be at least 0.1 part by weight. Preferably, (B) is present in an amount of at least 0.5 part by weight. The preferred amounts of (B) are from 0.5 to 10 parts by weight per 100 parts by weight of (A).

The amounts of (A) mixed with the mixtures of (A) and (B) should be at least one part by weight of platinum element per one million parts by weight of (A) and (B).

The mole ratio of silicon-bonded vinyl to silicon-bonded hydrogen can vary broadly such as from 0.01:1 to 30:1.

The ingredients (A), (B), and (C) are mixed and then cured to give the cured product which makes the crumb, The mixtures can be cured by letting it stand at room temperature or by heating it. After the mixture is cured, it is formed into crumbs by various techniques including stirring by hand. The compositions of are not tough materials and can be readily formed into a crumb. Preferably, the cured product is put through a particle sizer, such as a screen to make the crumb particles more consistent in particle size distribution.

The crumb can be made by the method described in copending application Serial No. 835,497, cited above. This method comprises mixing under low shear a vinyl-containing polyorganosiloxane, a silicon-bonded hydrogen containing polysiloxane, and a platinum catalyst until a crumb is obtained in fine particulate form. The mixing procedure can be quickly done with ordinary equipment to provide the low shear. For example, the mixing can be done easily by hand by stirring it with a spatula, by an air powered propeller mixer, or by more sophisticated commercial equipment such as a Baker Perkins, Ross, or Meyers mixer. The ingredients are placed in a container and then simply mixed until the crumb is obtained. The ingredients used in this method are important to the process because if the ingredients produce a cured material which will not crumb under low shear, produce a crumb which has unacceptable properties in hydraulic applications, or cannot be mixed with the equipment being used, this method will not function. Therefore, the steps and the ingredients are both important in making the crumb.

The vinyl-containing polyorganosiloxane, the silicon-bonded hydrogen containing polysiloxane, and the platinum catalyst begin to cure at room temperature when they are mixed, thus as the mixing continues the curing reaction is taking place. However, this room temperature reaction can be too fast and cure can occur before the ingredients are thoroughly mixed resulting in small domains throughout the material of highly crosslinked particles or regions and low or uncrosslinked regions, and for this reason, the presence of a platinum catalyst inhibitor which retards the reaction at room temperature between the vinyl-containing polyorganosiloxane and the silicon-bonded hydrogen containing polysiloxane is desirable. Those mixtures which contain platinum catalyst inhibitors can be heated to temperatures such as above 50-70°C. to overcome the inhibiting effect which allows the curing reaction to proceed. For this method to produce a crumb which is useful to transmit pressure evenly throughout, a homogeneous cure or crosslink density is desirable. A homogeneous cure cannot be obtained if the crosslinking reaction is too rapid and cured domains begin to appear before the ingredients are thoroughly mixed, thus it is important that the crosslinking be slow enough at room temperature or the mixing temperature to allow the ingredients to be thoroughly mixed before significant cure takes place.

The ingredients when being mixed can be heated to shorten the cure reaction time and the crumbing time. Heating is especially required when the ingredients contain a platinum catalyst inhibitor. The heat can be applied by any suitable heating means to the outside of the container for the ingredients being mixed. Heating means are well known in the art. The temperature when the platinum catalyst inhibitor is used is desirably above 50°C. and can be up to 200°C. or more. The higher temperatures should be used for short periods of time because the composition may result in undesirable side reactions if the heating is continued too long. The heating, mixing, and crumbing time can be as short as a few minutes and is preferably less than one hour.

The heating process for the ingredients during the mixing can be used to remove undesirable volatile materials which can increase the weight loss of the crumb during heating when in use. To remove the undesirable volatile materials the ingredients can be placed in a closed chamber and the pressure inside the chamber can be reduced to remove the unreacted and unreactable materials which can increase the weight loss of the crumb under high temperature conditions.

After the crumb is formed, it can be put through a particle sizer, for example a screen to make the crumb particles more uniform in size and thus flow better. Such particle distribution of sizes may also be important to conversion of the crumb to the clear liquid appearing state. The sizer can be any of those known in the art such as screens of various meshes.

The crumb has an extrusion rate of at least 50 grams per minute, preferably at least 800 grams per minute. This extrusion rate is determined by packing the crumb into a Semco tube with an orifice of 0.5 inch. The crumb is then extruded through the orifice for 10 seconds at a pressure of 345 kilopascals. The extruded crumb is weighed and then multiplied by six to get grams per minutes. The extrusion rate of the crumb shows the ease with which the crumb can be transferred from one location to another such as in a brake system, i.e. the rate of flow. The extrusion rate also relates to the ease with which the crumb can be transported by pneumatic means. The higher the extrusion rates means the more easily the crumb will flow.

The crumb also has compression points of less than 1035 kilopascals for the first two compressions. Compression points are determined by placing the crumb in a 10 milliliter syringe and pressing the plunger at the rate of one inch per minute using a tensiometer. The pressure at which the crumb goes from opaque to clear is recorded as the compression. The pressure is then released and the observance is made as to whether the clear material returns to crumb. Each compression and subsequent release of pressure is a cycle. In addition to the first compression, a crumb may be given five cycles. The compression points relate to the ease with which the crumb can be compressed and once in the compressed state, i.e. the clear, liquid appearing state, the pressure applied at any point in the system is transferred equally throughout the clear compressed state in the same manner as it is with a liquid. The subsequent release of the pressure to observe whether the crumb returns to its original crumb state shows the reusability of the silicone crumb. The extrusion points of the crumb are also determined by placing the crumb in a syringe which has a 1/16 of an inch orifice. The extrusion point is determined by placing the syringe in a compression jig for a tensiometer and compressing at the rate of one inch per minute. The minimum pressure needed to push the crumb through the orifice is the extrusion point. The extrusion point is an indication of the ability of the crumb to leak for openings. The extrusion point also shows that the crumb stays put unless there is force being applied to the crumb and that once the force is removed the crumb will stop leaking.

The crumb can be used to control the pressure to a predetermined value by being a readily flowable material the pressure can be controlled by adding crumb to increase the pressure and removing crumb from the system to reduce the pressure.

The crumb is more reversion resistant under confined conditions at the same temperature and pressure as the peroxide cured hydraulic elastomer powder of Bruner. The crumb is also safe and non-intrusive flowable pressurizable medium and has high, unique expansion characteristics. These properties are important features for a material which is to be used in a closed system, especially for the hydraulic systems of the isostatic pressure molding methods which are improved by using this silicone crumb.

## Claims

1. A process for molding an article by an isostatic pressing method which comprises placing a hardenable material containing a curable resin in a mold cavity in which said hardenable material is in contact with a flexible container containing a medium obtained by curing a vinyl-containing siloxane copolymer and being capable of applying fluid-like pressure, applying heat and pressure to cure said hardenable material, and thereafter removing said article from the mold,
**characterized by** using as said medium a silicone crumb comprising the cured product obtained by curing a mixture of
(A) a vinyl-containing polyorganosiloxane consisting essentially of diorganosiloxane, monoorganosilsesquioxane and/or triorganosiloxy units in which the organic radicals are monovalent hydrocarbon or monovalent halogenated hydrocarbon radicals, the content of vinyl radicals of said polyorganosiloxane being at least 0.1 weight percent,
(B) a silicon-bonded hydrogen containing polysiloxane in which there is at least 0.5 weight percent silicon-bonded hydrogen atoms, the valences of the silicon atoms not being satisfied by divalent oxygen atoms or silicon-bonded hydrogen atoms being satisfied by monovalent hydrocarbon or monovalent halogenated hydrocarbon radicals, and
(C) a platinum catalyst for the hydrosilation reaction of (A) and (B),
said cured product being in a fine particulate form which exhibits an extrusion rate of at least 50 grams per minute through an orifice of 1.27 cm ( 0.5 inch ) diameter under a pressure of 345 kilopascals and compression points of less than 1,035 kilopascals for the first two compressions.

2. The process of Claim 1 wherein said article is a composite and said hardenable material is a preform which contains, or is impregnated with, a curable resin.

3. The process of Claims 1 or 2 wherein said flexible container is an elastomeric or rubber bag.

4. The process of any of Claims 1 to 3 wherein said platinum catalyst (C) is a complex made from chloroplatinic acid and a divinylsiloxane.

5. The process of any of Claims 1 to 4 wherein said medium further comprises a filler.

## Patentansprüche

1. Verfahren zum Formen eines Gegenstandes in einem Verfahren mit isostatischem Druck, bei dem man ein härtbares Material, das ein härtbares Harz enthält, in eine Hohlform einbringt, in der es im Kontakt mit einem flexiblen Behälter steht, der ein Medium enthält, das durch Härten eines Vinylgruppen enthaltenden Siloxan-Copolymeren erhalten wurde und ähnlich wie eine Flüssigkeit Druck auszuüben vermag, Hitze und Druck anwendet, um das härtbare Material zu härten und danach den Gegenstand aus der Form entfernt, dadurch gekennzeichnet, daß man als das genannte Medium ein bröckeliges Silikon (silicone crumb) verwendet, enthaltend das gehärtete Produkt, das man herstellt durch Härten eines Gemisches aus
(A) einem Vinylgruppen enthaltenden Polyorganosiloxan, das im wesentlichen aus Diorganosiloxan-, Monoorganosilsesquioxan- und/oder Triorganosiloxy-Einheiten besteht, wobei die organischen Radikale einwertige Kohlenwasserstoffreste oder einwertige halogenierte Kohlenwasserstoffreste sind und der Gehalt an Vinylgruppen in dem Polyorganosiloxan mindestens 0,1 Gewichtsprozent beträgt,
(B) einem Polysiloxan mit an Silizium gebundenem Wasserstoff, wobei der Gehalt des an Silizium gebundenen Wasserstoffs mindestens 0,5 Gewichtsprozent beträgt und die Valenzen der Siliziumatome, die nicht mit Wasserstoff oder zweiwertigem Sauerstoff abgesättigt sind, durch einwertige Kohlenwasserstoffreste oder einwertige halogenierte Kohlenwasserstoffreste abgesättigt sind, und
(C) einem Platinkatalysator für die Hydrosilierungsreaktion von (A) und (B),
wobei das gehärtete Produkt in feinteiliger Form vorliegt, eine Extrusionsrate von mindestens 50 g/min durch eine Austrittsöffnung von 1,27 cm (0,5 inch) unter einem Druck von 345 kPa aufweist und Kompressionspunkte von weniger als 1.035 kPa für die ersten beiden Kompressionen zeigt.

2. Verfahren nach Anspruch 1, dadurch gekennzeichnet, daß der Gegenstand ein Verbundkörper ist und das härtbare Material ein vorgeformter Werkstoff, der ein härtbares Harz enthält oder damit imprägniert ist.

3. Verfahren nach den Ansprüchen 1 oder 2, dadurch gekennzeichnet, daß der flexible Behälter ein elastomerer Sack oder ein Gummisack ist.

4. Verfahren nach jedem der Ansprüche 1 bis 3, dadurch gekennzeichnet, das der Platinkatalysator (C) ein Komplex aus Hexachloroplatinsäure und Divinylsiloxan ist.

5. Verfahren nach jedem der Ansprüche 1 bis 4, dadurch gekennzeichnet, daß das Medium einen Füllstoff enthält.

## Revendications

1. Un procédé de moulage d'un article par une technique de pressage isostatique, qui consiste à placer une matière durcissable contenant une résine durcissable dans une cavité de moule dans laquelle ladite matière durcissable est en contact avec un récipient souple contenant un milieu obtenu par durcissement d'un copolysiloxane vinylique et capable d'appliquer une pression fluidique, à appliquer chaleur et pression pour durcir ladite matière durcissable, puis à retirer ledit article du moule,
caractérisé par l'utilisation, à titre dudit milieu, d'un produit particulaire de silicone comprenant le produit durci obtenu par durcissement d'un mélange de
(A) un polyorganosiloxane vinylique constitué essentiellement de motifs diorganosiloxanes, monoorganosilsesquioxanes et/ou triorganosiloxy dans lesquels les radicaux organiques sont des radicaux hydrocarbonés monovalents ou hydrocarbonés halogénés monovalents, la teneur en radicaux vinyle dudit polyorganosiloxane étant d'au moins 0,1 pour cent en poids,
(B) un polysiloxane contenant de l'hydrogène lié au silicium, dans lequel il y a au moins 0,5 pour cent en poids d'atomes d'hydrogène liés au silicium, les valences des atomes de silicium qui ne sont pas satisfaites par des atomes d'oxygène divalents ou des atomes d'hydrogène liés au silicium étant satisfaites par des radicaux hydrocarbonés monovalents ou hydrocarbonés halogénés monovalents, et
(C) un catalyseur au platine pour la réaction d'hydrosilylation de (A) et (B),
ledit produit durci étant sous une forme particulaire fine présentant une vitesse d'extrusion d'au moins 50 grammes par minute à travers un orifice de 1,27 cm (0,5 inch) de diamètre sous une pression de 345 kilopascals et des points de compression inférieurs à 1035 kilopascals pour les deux premières compressions.

2. Le procédé de la revendication 1, dans lequel ledit article est un article composite et ladite matière durcissable est une préforme qui contient, ou est imprégnée par, une résine durcissable.

3. Le procédé de la revendication 1 ou 2, dans lequel ledit récipient souple est un sac élastomère ou un sac en caoutchouc.

4. Le procédé de l'une quelconque des revendications 1 à 3, dans lequel ledit catalyseur au platine (C) est un complexe formé à partir d'acide chloroplatinique et d'un divinylsiloxane.

5. Le procédé de l'une quelconque des revendications 1 à 4, dans lequel ledit milieu contient, de plus, une charge.
